# EUROPÄISCHE PATENTSCHRIFT

(11) **EP 1 907 787 B1**
(45) Veröffentlichungstag und Bekanntmachung des Hinweises auf die Patenterteilung: **26.06.2013**
(21) Anmeldenummer: 06754676.2
(22) Anmeldetag: 06.07.2006
(51) Int. Cl.: G01B 7/012, G01B 5/012

(54) **SENSORMODUL FÜR EINEN TASTKOPF EINES TAKTILEN KOORDINATENMESSSGERÄTES**
SENSOR MODULE FOR A PROBE OF A TACTILE COORDINATE MEASURING DEVICE
MODULE CAPTEUR POUR UN PALPEUR D'UN APPAREIL DE MESURE DE COORDONNEES TACTILE

(30) Priorität: 26.07.2005 DE 102005036126
(43) Veröffentlichungstag der Anmeldung: 09.04.2008
(73) Patentinhaber: Carl Zeiss Industrielle Messtechnik GmbH, 73447 Oberkochen (DE)
(72) Erfinder: SEITZ, Karl, 73447 Oberkochen (DE); ROTH, Roland, 73550 Waldstetten (DE); DOMINICUS, Walter, 89551 Königsbronn (DE); STRAUSS, Wolfgang, 89195 Staig (DE)
(74) Vertreter: Duhme, Torsten
(86) Internationale Anmeldenummer: PCT/EP2006/006603
(87) Internationale Veröffentlichungsnummer: WO 2007/012389

(56) Entgegenhaltungen:
- EP-A- 0 572 800
- EP-A- 1 400 776
- WO-A2-02/090877
- DE-A1- 3 238 951
- DE-A1- 10 108 774
- DE-A1- 19 623 600
- DE-A1- 19 641 720

## Beschreibung

Die vorliegende Erfindung betrifft ein Sensormodul für einen Tastkopf eines taktilen Koordinatenmessgerätes, mit einer feststehenden Modulbasis, die eine erste Messebene definiert, mit einem relativ zu der Modulbasis beweglichen Träger, an dem ein Taststift befestigt ist, und mit zumindest einem deformierbaren Verbindungsglied, das den Träger und die Modulbasis beweglich miteinander verbindet, wobei das Verbindungsglied zumindest eine erste deformierbare Materiallage und eine zweite deformierbare Materiallage aufweist, die senkrecht zu der ersten Messebene versetzt zueinander angeordnet sind.

Ein solches Sensormodul ist aus EP 1 400 776 A1 bekannt.

Koordinatenmessgeräte werden vor allem dazu verwendet, die Objektform eines Messobjekts mit großer Genauigkeit zu vermessen. Beispielsweise wird die Objektform von einem maschinell hergestellten Werkstück im Rahmen der Qualitätskontrolle überprüft. Für den Messvorgang wird der Tastkopf des Koordinatenmessgerätes über eine geeignete Verschiebemechanik so weit an das Messobjekt herangefahren, bis der beweglich gelagerte Taststift einen gewünschten Messpunkt am Messobjekt berührt. Anschließend kann die Raumkoordinate des angetasteten Messpunktes aus der Stellung des Tastkopfes und aus der relativen Lage des Taststiftes zum Tastkopf bestimmt werden.

Üblicherweise ist der Taststift über Federmechanismen und/oder Gleit- oder Rollenlager beweglich an dem Tastkopf aufgehängt. Um die Auslenkungen des Taststiftes relativ zum Tastkopf zu erfassen, werden beispielsweise Tauchspulen oder Hallsensoren verwendet. Solche "herkömmlichen" Tastkopfkinematiken sind mehrere Zentimeter groß. In DE 101 08 774 A1 ist dagegen in einem Ausführungsbeispiel ein Sensormodul für einen miniaturisierten Tastkopf beschrieben. Das Sensormodul besteht aus einem Silizium-Einkristall und die Struktur des Moduls wurde aus einem Silizium-Vollkörper durch Ätzen gefertigt. Die Kantenlänge des gesamten Sensormoduls beträgt nur 6 mm, die Profildicke der Modulbasis liegt bei 0,5 mm. Das deformierbare Verbindungsglied, über das der ebenfalls miniaturisierte Taststift mit der Modulbasis verbunden ist, besteht aus Silizium-Stegen mit einer Dicke von etwa 30 µm, die beim Ausätzen des Vollkörpers stehen gelassen wurden. Bei einer Auslenkung des Taststiftes verwinden sich die Stege, was mit Hilfe von Dehnungssensoren erfasst werden kann. Auf Grund der Miniaturisierung und des fragilen Aufbaus begründet dieses Sensormodul eine neue Generation von Tastköpfen für taktile Koordinatenmessgeräte, mit denen auf Grund der geringen Abmessungen und Auslenkungen sehr genaue Messungen an Mikrostrukturen möglich werden.

Das Grundkonzept eines solchen Sensormoduls für einen taktilen Tastkopf ist aus einem Artikel von Kleine-Besten et al. mit dem Titel "Miniaturisierter 3D-Tastsensor für die Metrologie an Mikrostrukturen" bekannt, der in der DE-Zeitschrift "tm-Technisches Messen", Ausgabe 12/99, Seiten 490 - 495 erschienen ist. In diesem Artikel werden Untersuchungsergebnisse an einem solchen miniaturisierten Sensormodul beschrieben, wobei der Träger zum Aufnehmen des Taststiftes (der sog. "Boss") im Gegensatz zu dem Ausführungsbeispiel aus der DE 101 08 774 A1 über eine Vollmembran an der Modulbasis gehalten ist. Die in DE 101 08 774 A1 beschriebene Halterung des Bosses mit Hilfe von einzelnen Stegen ist in dem Artikel als ein Ausblick erwähnt, um die Biegesteifigkeiten des Moduls in den drei Raumrichtungen x, y, z aneinander anzugleichen. Die Untersuchung des Sensormoduls mit Vollmembran hat nämlich gezeigt, dass die Biegesteifigkeiten bei Auslenkungen des Taststiftes in einer Ebene parallel zur Modulbasis (x- bzw. y-Richtung) wesentlich geringer sind als bei einer Auslenkung senkrecht zur Modulbasis (z-Richtung).

Die Befestigung des Bosses bzw. des Taststiftes an der Modulbasis mit Hilfe von Stegen führt bereits zu einer Angleichung der Biegesteifigkeiten. Es bestehen jedoch weiterhin erhebliche Schwierigkeiten, wenn Messvorgänge durchgeführt werden sollen, bei denen der Tastkopf in stetigem Kontakt mit dem Messobjekt geführt wird (sog. Scannen). Bei solchen komplexen Messvorgängen ist es trotz der bereits erreichten Angleichung der Biegesteifigkeiten immer noch problematisch, die Auslenkung in z-Richtung exakt zu bestimmen.

Aus DE 103 14 304 A1 bzw. der prioritätsgleichen WO 2004/068068 ist ebenfalls ein Tastkopf mit einem miniaturisierten Sensormodul bekannt. Diese Druckschrift betrifft allerdings die mechanische Befestigung des fragilen Sensormoduls an einem Tastkopf. Das Problem der unterschiedlichen Biegesteifigkeiten ist nicht thematisiert.

In einer älteren, nicht-vorveröffentlichten Anmeldung der vorliegenden Anmelderin (PCT/EP2005/005622) ist ein Sensormodul beschrieben, bei dem die Stege zwischen der Modulbasis und dem Taststiftträger (Boss) im Querschnitt mit einer wechselnden Materialdicke ausgebildet sind. Diese Realisierung führt zu einer weiteren Angleichung der Biegesteifigkeiten, so dass sich scannende Messungen relativ gut durchführen lassen. Allerdings sind die Biegesteifigkeiten in x-/y-Richtung und z-Richtung auch bei dieser Lösung noch nicht identisch. Außerdem erfordert die Herstellung dieses neuen Sensormoduls sehr feine Ätzstrukturen, die mit hoher Genauigkeit ausgeführt werden müssen, was eine fertigungstechnische Herausforderung darstellt.

Aus der eingangs genannten EP 1 400 776 A1 geht ein Sensormodul für einen Taststift eines Koordinatenmessgerätes hervor. Das Sensormodul weist ein deformierbares Verbindungsglied mit einer ersten und einen zweiten Materiallage auf. Diese beiden Materiallagen sind Bestandteil eines 3D-Schockabsorbers, über den der Taststift mit dem Sensormodul verbunden ist. Die beiden Materiallagen sind als steife Blattfedern ausgeführt. Das Sensormodul besitzt ferner eine Anordnung zur Übertragung von Bewegungen des Taststiftes, die dazu dient Relativbewegungen des Taststiftes zu dem Tastkopf zu ermöglichen und messtechnisch zu erfassen. Die Blattfedern sind als Schockdämpfer ausgebildet und weisen eine höhere Steifigkeit auf als die Anordnung.

Aus DE 196 23 600 A1 geht ein Tastkopf eines Koordinatenmessgeräts hervor, der ein auslenkbares Tragteil besitzt. Das Tragteil ist über ein Federparallelogramm an einem verfahrbaren Messarm des Koordinatenmessgeräts befestigt.

Die DE 196 41 720 A1 offenbart ein Koordinatenmessgerät, dessen Tastkopf einen federnd gelagerten Taststift aufweist. Der Taststift ist über drei Federparallelogramme, bestehend aus jeweils zwei Blattfedern, in drei Richtungen bewegbar gelagert.

Die europäische Veröffentlichungsschrift 0 572 800 A1 hat einen Tastfühler zum Gegenstand, der eine Auslenkung eines Taststiftes erfasst. Der Taststift ist über ein bewegbares Wippelement in Form eines Federparallelogramms mit dem Tastfühler verbunden. Das Wippelement ermöglicht für eine Messung benötigte Bewegungen des Taststiftes.

Die WO 02/090877 A2 offenbart einen Tastkopf für ein Koordinatenmessgerät. Der Tastkopf besitzt eine Taststifthalterung, die im Tastkopf bewegbar befestigt ist. Es ist eine Federanordnung vorgesehen, die die Taststifthalterung in einer Ruhelage hält oder in diese zurückführt.

Vor diesem Hintergrund ist es eine Aufgabe der vorliegenden Erfindung, ein alternatives Sensormodul für Messungen an Mikrostrukturen anzugeben, bei dem die Biegesteifigkeiten in den drei Raumrichtungen möglichst gut aneinander angeglichen sind.

Diese Aufgabe wird gemäß einem Aspekt der vorliegenden Erfindung durch ein Sensormodul der eingangs genannten Art gelöst, bei dem das Sensormodul aus zumindest zwei einlagigen Modulteilen besteht, die aufeinandergesetzt und aneinander befestigt sind, wobei jedes Modulteil eine Modulbasis in Form eines Rahmens und einen Taststiftträger besitzt, der innerhalb des Rahmens angeordnet und über eine der deformierbaren Materiallagen mit dem zugehörigen Rahmen verbunden ist, wobei sich die beiden Modulteile sowohl im Bereich der Rahmen als auch im Bereich der Taststiftträger berühren, wobei die Materiallagen in einem räumlichen Abstand voneinander angeordnet sind, und wobei jede Materiallage aus einem Halbleitermaterial besteht und einstückig mit dem zugehörigen Rahmen und Taststiftträger verbunden ist.

Das neue Sensormodul ist also zumindest zweilagig ausgebildet, wobei die Materiallagen des deformierbaren Verbindungsgliedes senkrecht zu der ersten Messebene in unterschiedlicher "Höhe" angeordnet sind. Vorteilhafterweise werden die zumindest zwei Materiallagen im Ruhezustand des Sensormoduls parallel zueinander liegen. In besonders bevorzugten Ausführungsbeispielen sind die zumindest zwei Materiallagen außerdem mit einem erkennbaren räumlichen Abstand zueinander angeordnet.

Untersuchungen der Anmelderin haben gezeigt, dass sich die Biegesteifigkeit des Verbindungsgliedes in z-Richtung um einen Faktor erhöht, der in etwa der Anzahl der versetzt zueinander angeordneten Materiallagen entspricht. Die Biegesteifigkeit in x- bzw. y-Richtung verändert sich demgegenüber in Abhängigkeit von der geometrischen Anordnung und den geometrischen Abmessungen der zumindest zwei Materiallagen. Da sich die Biegesteifigkeiten in x-/y-Richtung und z-Richtung somit unterschiedlich beeinflussen lassen, kann eine Angleichung der Biegesteifigkeiten in den verschiedenen Richtungen erreicht werden. In einem besonders einfachen Ausführungsbeispiel lässt sich eine Angleichung bereits erreichen, wenn man zwei "herkömmliche" Sensormodule, wie sie beispielsweise aus dem Artikel von Kleine-Besten et al. bekannt sind, übereinander anordnet, wobei die Modulbasen (Rahmen) der Einzelmodule und vorzugsweise auch die Taststiftträger miteinander verbunden werden. In diesem Fall stellen die Membranen der Einzelmodule ein zweilagiges, deformierbares Verbindungsglied dar, bei dem die Steifigkeit in z-Richtung gegenüber dem Einzelmodul etwa verdoppelt ist, während die Biegesteifigkeit in x-/y-Richtung vom vertikalen Abstand der Membranen und von der Membrandicke abhängen. Alternativ hierzu kann ein Sensormodul mit einem mehrlagigen Aufbau jedoch auch mit einer einstückigen Modulbasis realisiert werden.

Das neue Sensormodul ermöglicht eine Angleichung der Biegesteifigkeiten in den verschiedenen Raumrichtungen. Im Gegensatz zu der Lösung, die in der nicht-vorveröffentlichten PCT/EP2005/005622 beschrieben ist, müssen die einzelnen Materiallagen kein wechselndes Querschnittsprofil aufweisen, wenngleich dies zur weiteren Angleichung der Biegesteifigkeiten durchaus möglich ist. Das neue Sensormodul stellt somit eine Alternative dar, die zumindest in einigen bevorzugten Ausführungsbeispielen fertigungstechnisch einfacher zu realisieren ist.

Die Untersuchungen der Anmelderin haben gezeigt, dass sich die Biegesteifigkeit in x-/y-Richtung in etwa proportional zu dem Verhältnis a/d erhöht, wobei a der vertikale Abstand der zumindest zwei Materiallagen ist, während d die Dicke der einzelnen Materiallagen angibt. Die Biegesteifigkeit in x-/y-Richtung kann also auf konstruktiv sehr einfache Weise beeinflusst werden, wenn man einen erkennbaren Abstand zwischen den Materiallagen vorsieht.

Das neue Sensormodul ist aus mehreren einlagigen Sensormodulen zusammengesetzt. Dies ermöglicht eine besonders einfache und kostengünstige Herstellung.

Die zumindest zwei Materiallagen liegen in funktionaler Hinsicht parallel zueinander. Geometrisch können die beiden Materiallagen trotzdem schräg zueinander angestellt sein. Diese Ausgestaltung ist fertigungstechnisch einfach und sie ermöglicht insbesondere die vorteilhafte Zusammensetzung des neuen Sensormoduls aus mehreren einlagigen Sensormodulen. Darüber hinaus ist die Angleichung der Biegesteifigkeiten in dieser Ausgestaltung relativ einfach und determiniert bestimmbar.

Vorzugsweise ist das gesamte Sensormodul aus einem Halbleitermaterial hergestellt, und das Verbindungsglied ist einstückig mit der Modulbasis und dem Taststiftträger verbunden. Des Weiteren ist es bevorzugt, wenn die Struktur des Sensormoduls durch Ätzen aus einem Vollkörper hergestellt wird, wobei mehrere einlagige Sensormodule getrennt hergestellt werden können und dann über eine geeignete Verbindung, beispielsweise eine Klebeverbindung, miteinander verbunden werden.

Die Verwendung eines Halbleitermaterials für das neue Sensormodul ermöglicht eine besonders kostengünstige Herstellung und eine hohe Miniaturisierung. Als Halbleitermaterial eignet sich vor allem einkristallines Silizium. Grundsätzlich kommen jedoch auch andere Halbleitermaterialien in Betracht.

In einer Ausgestaltung ist zwischen der ersten und der zweiten Materiallage ein Füllmaterial angeordnet. Das Füllmaterial kann elastisch sein und/oder nur abschnittsweise zwischen den beiden Materiallagen angeordnet sein.

Die Verwendung eines Füllmaterials, das sich von dem Material der Materiallagen unterscheiden kann, eröffnet einen weiteren Freiheitsgrad, um die Biegesteifigkeiten in den drei Raumrichtungen anzugleichen. Außerdem erleichtert diese Ausgestaltung die Herstellung des neuen Sensormoduls insbesondere in den Fällen, in denen das Sensormodul aus zwei oder mehr einlagigen Einzelmodulen zusammengesetzt wird. Die Verwendung eines Füllmaterial ist darüber hinaus eine sehr einfache Möglichkeit, um einen großen vertikalen Abstand zwischen den Materiallagen zu realisieren, insbesondere bei zusammengesetzten "einlagigen" Modulen.

In einer weiteren Ausgestaltung bestehen die erste und die zweite Materiallage aus unterschiedlichem Material.

Diese Ausgestaltung bietet einen weiteren Freiheitsgrad für die Angleichung der Biegesteifigkeiten. Insbesondere die Verwendung von anisotropen Materialien und/oder unterschiedliche Dotierungen in den Materiallagen ermöglichen es, die mechanischen Eigenschaften und die Biegesteifigkeiten in den drei Raumrichtungen zu variieren.

In einer weiteren Ausgestaltung sind die erste und die zweite Materiallage deckungsgleich übereinander angeordnet.

Diese Ausgestaltung ergibt sich zwangsläufig, wenn zwei einlagige Einzelmodule übereinander angeordnet werden, bei denen das deformierbare Verbindungsglied als Vollmembran ausgebildet ist. Diese Ausgestaltung ist jedoch auch möglich, wenn das deformierbare Verbindungsglied aus einzelnen Stegen besteht, wie dies in der genannten DE 101 08 774 A1 beschrieben ist. Der Vorteil dieser Ausgestaltung ist der einfache und stabile mechanische Aufbau des neuen Sensormoduls.

In einer weiteren Ausgestaltung beinhaltet das Verbindungsglied zumindest einen ersten stegförmigen Bereich, der die erste Materiallage bildet.

Wie bereits weiter oben erwähnt, trägt schon die Verwendung von steg- oder bandförmigen Verbindungsgliedern zu einer Angleichung der Biegesteifigkeiten bei. Die Kombination mit dem neuen mehrlagigen Aufbau ermöglicht eine besonders gute Angleichung, die insbesondere für die Durchführung von scannenden Messungen geeignet ist.

In einer weiteren Ausgestaltung beinhaltet das Verbindungsglied zumindest einen zweiten stegförmigen Bereich, der die zweite Materiallage bildet.

In dieser Ausgestaltung sind beide Materiallagen (eventuell alle Materiallagen bei einer mehrlagigen Realisierung) stegförmig ausgebildet. Diese Ausgestaltung ist ebenfalls sehr einfach zu realisieren, wenn man zwei einlagige Sensormodule mit stegförmigen Verbindungsgliedern übereinander anordnet. Mit einer solchen Ausgestaltung lässt sich eine besonders gute Angleichung der Biegesteifigkeiten erreichen.

In einer weiteren Ausgestaltung sind der erste und der zweite stegförmige Bereich parallel zu der ersten Messebene versetzt zueinander angeordnet.

In dieser Ausgestaltung sind die stegförmigen Bereiche nicht deckungsgleich übereinander angeordnet. Besonders vorteilhaft ist diese Ausgestaltung, wenn in jeder Materiallage nur zwei Stege vorgesehen sind, so dass sich erst bei übereinandergesetzten Materiallagen eine kreuzförmige Verbindung zwischen dem Taststiftträger und der Modulbasis ergibt, wobei dann die Äste des Kreuzes in verschiedenen Ebenen liegen. Diese Ausgestaltung ist einfach und kostengünstig zu realisieren und sie ermöglicht eine gute Angleichung der Biegesteifigkeiten in den drei Raumrichtungen.

In einer weiteren Ausgestaltung beinhaltet das Verbindungsglied zumindest einen weitgehend geschlossenen Membranbereich, der die zweite Materiallage bildet.

Auch diese Ausgestaltung ist besonders vorteilhaft, wenn das neue Sensormodul aus mehreren einlagigen Sensormodulen zusammengesetzt wird. Die Verwendung eines einlagigen Sensormoduls mit einem membranartigen Verbindungsglied ermöglicht einen stabilen Modulaufbau. In Kombination mit einem zweiten Modul mit stegförmigen Verbindungsgliedern bietet sich ein weiterer Freiheitsgrad für eine individuelle Anpassung der Biegesteifigkeiten. Darüber hinaus ist die Herstellung von Sensormodulen mit membranartigen Verbindungsgliedern sehr einfach und kostengünstig.

In einer weiteren, denkbaren Ausgestaltung bilden die zumindest zwei Materiallagen ein mehrteiliges Gelenk, das im Querschnitt vorteilhafterweise mäanderförmig ausgebildet ist. Mit anderen Worten beinhaltet das Verbindungsglied in dieser Ausgestaltung ein mehrteiliges Gelenk, das sich über mehrere Ebenen erstreckt. Diese Ausgestaltung ist in fertigungstechnischer Hinsicht aufwendiger, sie bietet jedoch weitere Freiheitsgrade und ermöglicht daher eine besonders gute Anpassung der Biegesteifigkeiten.

In einer weiteren Ausgestaltung beinhaltet das neue Sensormodul einen Taststift, der an dem beweglichen Taststiftträger unlösbar befestigt ist.

Diese Ausgestaltung ist besonders vorteilhaft für die Realisierung eines miniaturisierten Sensormoduls, da eine unlösbare Befestigung des Taststiftes die Einhaltung von geringen Fertigungstoleranzen gewährleistet und somit zu einer hohen Messgenauigkeit beiträgt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Koordinatenmessgerätes, in dem das neue Sensormodul zum Einsatz kommt,
- Fig. 2: die Zusammensetzung eines Ausführungsbeispiels des neuen Sensormoduls aus zwei einlagigen Sensormodulen,
- Fig. 3: das Sensormodul aus Fig. 2 im zusammengesetzten Zustand,
- Fig. 4: das Sensormodul aus Fig. 3 in einer Querschnittsansicht,
- Fig. 5: ein zweites Ausführungsbeispiel für ein zusammengesetztes Sensormodul,
- Fig. 6: ein drittes Ausführungsbeispiel für ein zusammengesetztes Sensormodul,
- Fig. 7: ein viertes Ausführungsbeispiel für ein zusammengesetztes Sensormodul in einer Querschnittsansicht, und
- Fig. 8: ein fünftes Ausführungsbeispiel für das neue Sensormodul.

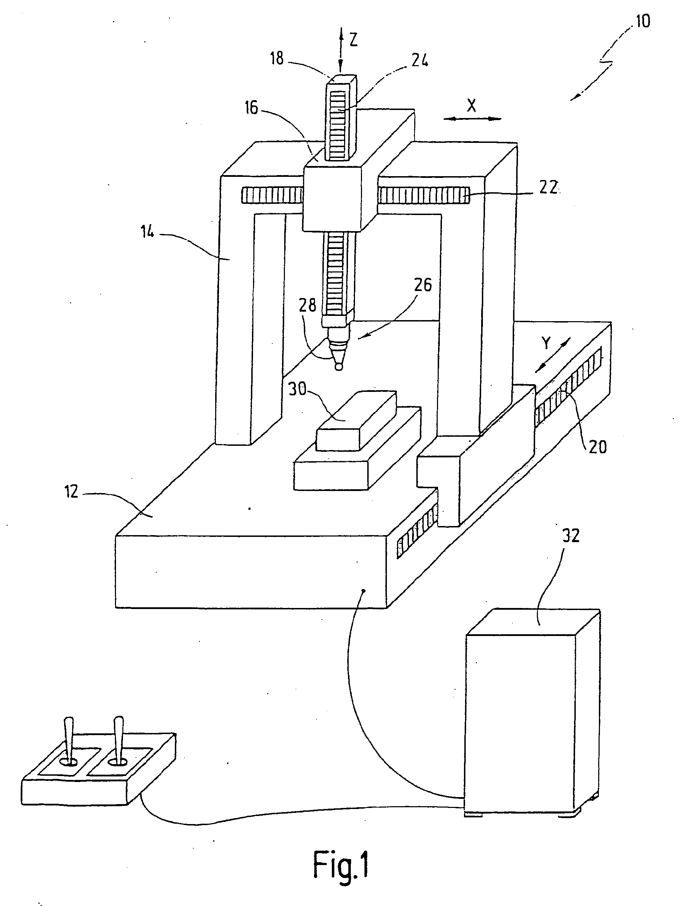

In Fig. 1 ist ein Koordinatenmessgerät in seiner Gesamtheit mit der Bezugsziffer 10 bezeichnet. Das Koordinatenmessgerät 10 ist hier in Portalbauweise dargestellt, die häufig anzutreffen ist. Die vorliegende Erfindung ist jedoch nicht auf diese Bauweise beschränkt. Grundsätzlich kann das neue Sensormodul auch bei anderen Bauweisen verwendet werden, beispielsweise bei Horizontalarmmessgeräten. Besonders bevorzugt ist es, das neue Sensormodul bei einem Koordinatenmessgerät einzusetzen, wie es in der nicht-vorveröffentlichten DE-Anmeldung mit dem Aktenzeichen 10 2004 020 996.0 beschrieben ist. Dieses bevorzugte Koordinatenmessgerät besitzt eine Verschiebemechanik für den Tastkopf, die von den üblichen Konstruktionen abweicht und in ihrem Grundprinzip in einer Dissertation von Marc Vermeulen mit dem Titel "High Precision 3D-Coordinate Measuring Machine" beschrieben ist, die unter der ISBN-Nr. 90-386-2631-2 erhältlich ist. Der Einfachheit halber wird für die nachfolgende Beschreibung jedoch auf das in Fig. 1 dargestellte Koordinatenmessgerät Bezug genommen, weil dessen Verschiebemechanik übersichtlicher und gewohnter ist.

Das Koordinatenmessgerät 10 besitzt eine Grundplatte 12, auf der ein Portal 14 in Längsrichtung verschieblich angeordnet ist. Diese Längsrichtung wird üblicherweise als y-Achse bezeichnet. Am oberen Querträger des Portals 14 ist ein in x-Richtung verschieblicher Schlitten 16 angeordnet, der eine in z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in den drei Raumrichtungen x, y, z ablesen lässt. Die Skalen 20, 22, 24 können vom Grundsatz her einfache Messskalen sein, die von einem Bediener des Koordinatenmessgerätes 10 abgelesen werden. Bevorzugt handelt es sich hier jedoch um Wegmessgeber, die maschinell ausgelesen werden, beispielsweise um Glasmaßstäbe, die optisch abgetastet werden.

Am unteren freien Ende der Pinole 18 ist ein Tastkopf 26 angeordnet, der einen hier nicht maßstabsgetreu dargestellten Taststift 28 trägt. Der Taststift 28 dient dazu, definierte Messpunkte an einem Messobjekt 30 anzutasten. Das Messobjekt 30 ist dazu auf der Grundplatte 12 des Koordinatenmessgerätes 10 angeordnet. Die Raumkoordinate des angetasteten Messpunktes kann aus der Stellung des Tastkopfes 26 im Messvolumen des Koordinatenmessgerätes 10 und aus der Auslenkung des Taststiftes 28 relativ zum Tastkopf bestimmt werden. Die Befestigung der nachfolgend beschriebenen Sensormodule an dem Tastkopf 28 erfolgt vorzugsweise mit Hilfe eines Tastkopfhalters, wie er in DE 103 14 304 A1 beschrieben ist.

Der Vollständigkeit halber ist das Koordinatenmessgerät 10 hier mit einer Auswerte- und Steuereinheit 32 dargestellt, über die der Messablauf gesteuert wird und die außerdem zur Aufbereitung und Ausgabe der Messwerte dient.

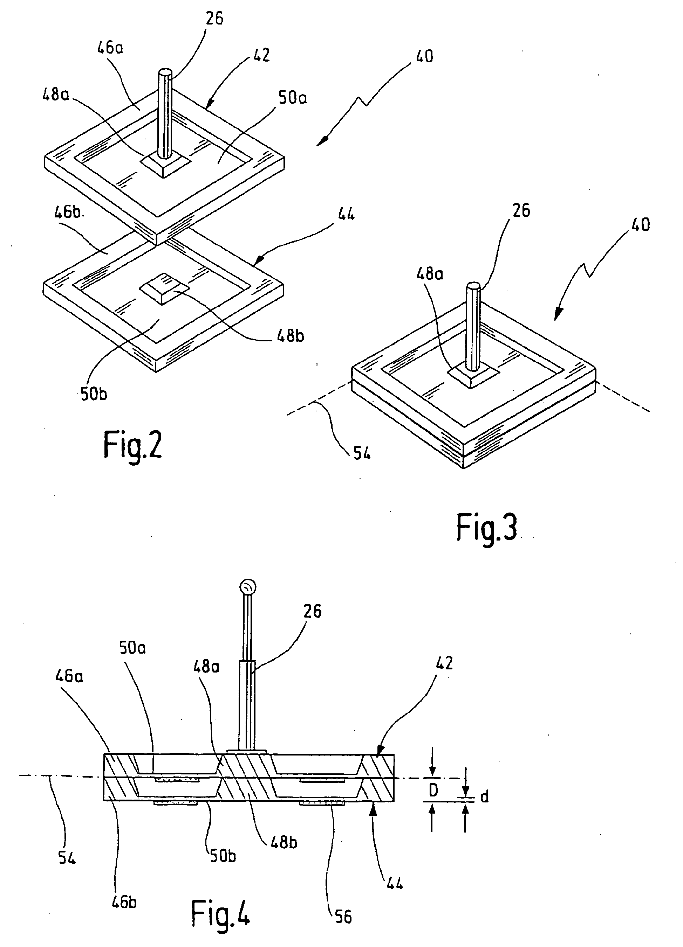

In den Fig. 2, 3 und 4 ist ein erstes Ausführungsbeispiel des neuen Sensormoduls insgesamt mit der Bezugsziffer 40 bezeichnet. Das Sensormodul 40 besteht aus zwei einlagigen Modulteilen 42, 44, die aufeinandergesetzt und aneinander befestigt werden (Fig. 2). Jedes Modulteil 42, 44 besitzt eine Modulbasis 46a, 46b, die hier als ein quadratischer Rahmen ausgebildet ist. Innerhalb jedes Rahmens 46a, 46b ist ein Taststiftträger 48a, 48b angeordnet, der als "Boss" bezeichnet wird. Jeder Taststiftträger 48a, 48b ist über eine Membran 50a, 50b mit dem zugehörigen Rahmen 46a, 46b verbunden. Die Kantenlänge der Rahmen 46a, 46b, d.h. die Außenabmessungen des Sensormoduls 40, liegt hier zwischen etwa 3 und 10 mm, beispielsweise bei 6,5 mm. Der Rahmen 46a, 46b, der Taststiftträger 48a, 48b und die Membran 50a, 50b sind hier durch einen Ätzprozess aus einem Silizium-Vollkörper herausgearbeitet. Die Dicke der Membran beträgt beispielsweise 0,025 mm, während der Rahmen und der Taststiftträger etwa 0,5 mm stark sind. Auf Grund dieser geometrischen Abmessungen kann sich der Taststiftträger 48a, 48b relativ zu dem Rahmen 46a, 46b bewegen, wobei sich die Membran 50a, 50b verformt.

An dem Taststiftträger 48a des oberen Modulteils 42 ist ein Taststift 26 unlösbar befestigt, beispielsweise verklebt. Das Modulteil 42 mit dem Taststift 26 entspricht für sich genommen einem Sensormodul, wie es beispielsweise aus dem eingangs genannten Stand der Technik bekannt ist. Neu ist, dass das Sensormodul 40 aus zwei (oder mehr) solchen Modulteilen 42, 44 aufgebaut ist, die in der in Fig. 3 dargestellten Weise aufeinander angeordnet sind. Es versteht sich, dass in diesem Fall nur das oberste Modulteil 42 einen Taststift 26 trägt.

Mit der Bezugsziffer 54 ist in Fig. 3 die (erste) Messebene bezeichnet, die bei bestimmungsgemäßer Verwendung des Sensormoduls 40 von der Modulbasis 46a, 46b definiert wird. Die Messebene 54 ist bei bestimmungsgemäßem Einsatz des Sensormoduls 40 parallel zur x-/y-Ebene des Koordinatenmessgerätes 10.

Wie in der Querschnittsdarstellung in Fig. 4 zu erkennen ist, berühren sich die beiden Modulteile 42, 44 sowohl im Bereich der Rahmen 46a, 46b als auch im Bereich der Taststiftträger 48a, 48b. Die Membranen 50a, 50b sind hingegen in einem Abstand voneinander angeordnet, der der Differenz zwischen der Höhe D des Rahmens 46a, 46b und der Materialstärke d der Membranen 50a, 50b entspricht. Das Verhältnis (D-d)/d bestimmt in diesem Ausführungsbeispiel den Faktor, um den die Biegesteifigkeit bei Auslenkungen des Taststiftes 26 in x- oder y-Richtung gegenüber der entsprechenden Biegesteifigkeit des einzelnen Modulteils 42 erhöht ist. Demgegenüber ist die Biegesteifigkeit des zweilagigen Sensormoduls 40 bei Auslenkungen des Taststiftes in z-Richtung (senkrecht zur Messebene 54) um den Faktor 2 erhöht. Durch geeignete Wahl der geometrischen Abmessungen d und D kann eine Angleichung der Biegesteifigkeiten in x-/y-Richtung und z-Richtung erreicht werden.

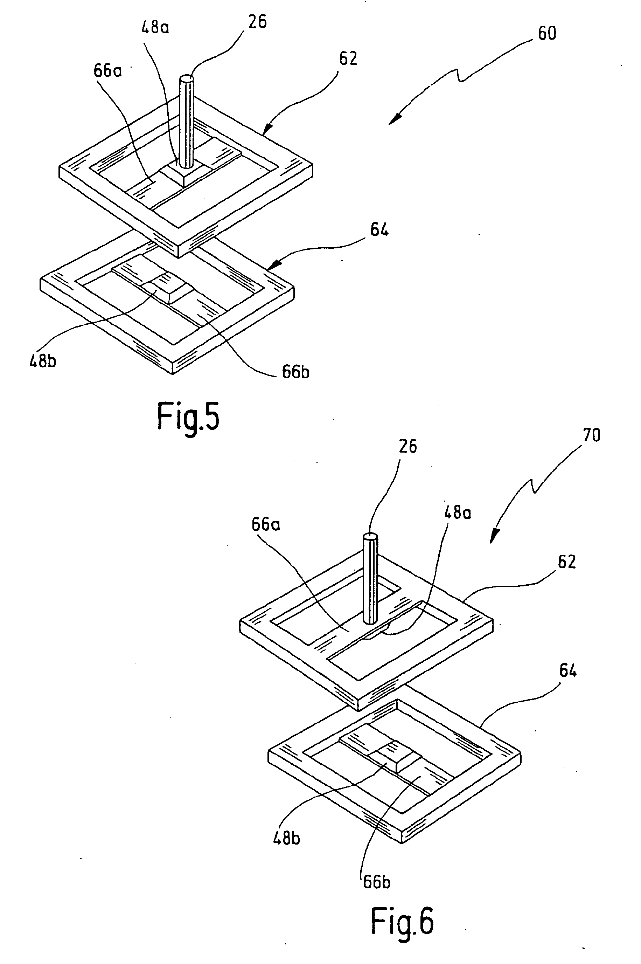

In Fig. 5 ist ein zweites Ausführungsbeispiel des neuen Sensormoduls in seiner Gesamtheit mit der Bezugsziffer 60 bezeichnet. Auch das Sensormodul 60 besteht aus zwei Modulteilen 62, 64, die übereinander angeordnet und aneinander befestigt werden. Im Unterschied zu den Modulteilen 42, 44 aus Fig. 2 sind die Verbindungsglieder hier lediglich Streifen 66a, 66b, die mittig von einer Rahmenseite zur anderen verlaufen. Die Taststiftträger 48a, 48b sind mittig auf den Streifen 66a, 66b ausgebildet. Mit anderen Worten unterscheiden sich die Modulteile 62, 64 von den Modulteilen 42, 44 aus Fig. 2 dadurch, dass die Verbindungsglieder hier nicht als Vollmembranen ausgebildet sind. Rechts und links von den Streifen 66a, 66b sind die Modulteile 62, 64 "offen". Alternativ hierzu könnten die Streifen 66a, 66b auch dadurch gebildet sein, dass lediglich ein Schlitz in die Vollmembran 50a, 50b aus dem Ausführungsbeispiel aus Fig. 2 geätzt oder anderweitig eingebracht ist. Eine solche Lösung ist fertigungstechnisch einfacher und genauer zu realisieren als das Entfernen von größeren Flächenbereichen.

In dem Ausführungsbeispiel in Fig. 5 sind die beiden Modulteile 62, 64 so aufeinander angeordnet, dass die streifenförmigen Verbindungsglieder 66a, 66b um 90° versetzt zueinander liegen. Das Sensormodul 60 besitzt damit ein kreuzförmiges Verbindungsglied in der hier nicht dargestellten Draufsicht. Dabei liegen die Äste des Kreuzes (d.h. die Streifen 66a, 66b) in unterschiedlichen Ebenen, wie dies in Fig. 4 für die Vollmembranen dargestellt ist.

In Fig. 6 ist ein weiteres Ausführungsbeispiel des neuen Sensormoduls mit der Bezugsziffer 70 bezeichnet. Gleiche Bezugszeichen bezeichnen dieselben Elemente wie zuvor. Auch das Sensormodul 70 besteht aus zwei einlagigen Modulteilen 62, 64. Im Unterschied zu dem Ausführungsbeispiel aus Fig. 5 ist das obere Modulteil 62 hier auf den Kopf gestellt, d.h. es ist um 180° um eine in der Messebene 54 liegende Horizontalachse verschwenkt. Dadurch liegen die freien Stirnseiten der Taststiftträger 48a, 48b im zusammengesetzten Zustand aufeinander. Der Taststift 26 ist auf der Rückseite des Taststiftträgers 48a befestigt. Dieses Ausführungsbeispiel besitzt den Vorteil, dass der relative Abstand der beiden Streifen 66a, 66b vergrößert ist, wodurch sich die Biegesteifigkeit in x-/y-Richtung bei ansonsten gleichen Abmessungen einfacher an die Biegesteifigkeit in z-Richtung anpassen lässt.

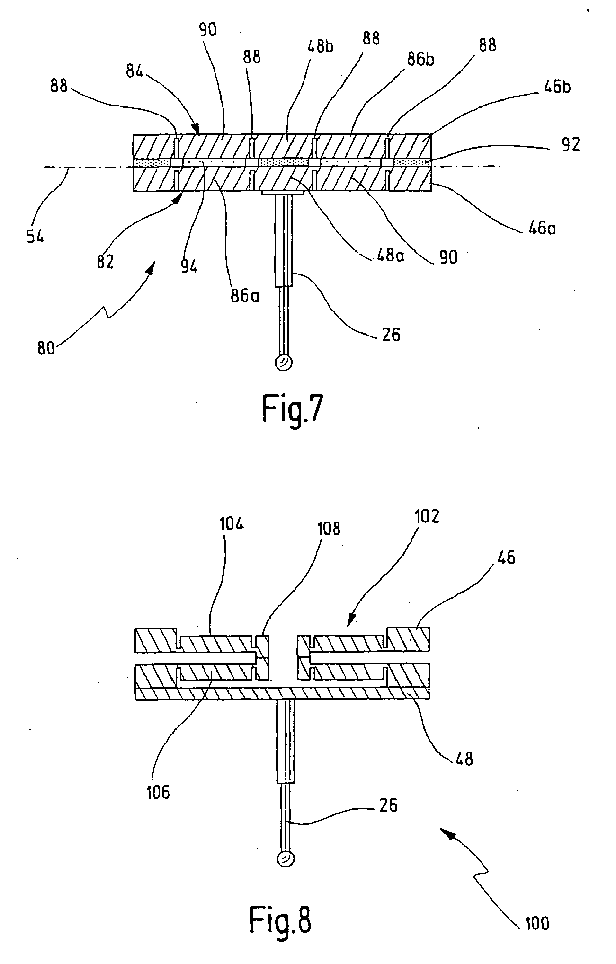

In Fig. 7 ist ein weiteres Ausführungsbeispiel des neuen Sensormoduls mit der Bezugsziffer 80 bezeichnet. Auch das Sensormodul 80 besteht aus zwei Modulteilen 82, 84, die aufeinandergesetzt und aneinander befestigt sind. Die deformierbaren Verbindungsglieder 86a, 86b sind hier als stegförmige Bereiche ausgebildet (ähnlich wie in den Ausführungsbeispielen gemäß Fig. 5 und Fig. 6), wobei jeder Steg 86 zwei materialschwache Abschnitte 88 aufweist, die einen materialstarken Stegabschnitt 90 begrenzen. Mit anderen Worten besitzt der Vollkörper jedes Modulteils 82 im Profil nur schmale Schlitze, die den Rahmen 46 und den Taststiftträger 48 von den Stegabschnitten 90 trennen. Da die Schlitze nicht bis zum Grund des Vollmaterials ausgebildet sind, verbleibt im Bereich der Schlitze ein Stegbereich 88 mit einer geringen Materialstärke d, während der dazwischenliegende Stegbereich 90 in etwa dieselbe Materialstärke aufweist wie der äußere Rahmen 46. Im Übrigen sind die Stege 86 kreuzförmig ausgebildet, wie dies für sich genommen von dem Sensormodul aus DE 101 08 774 A1 bekannt ist. Der strukturelle Aufbau der einzelnen Modulteile 82, 84 entspricht damit dem einlagigen Sensormodul, das in der nicht-vorveröffentlichten PCT/EP2005 /005622 beschrieben ist.

In diesem Ausführungsbeispiel ist zwischen den Modulteilen 82, 84 noch ein Füllmaterial 92 angeordnet. Das Füllmaterial 92 verbindet die beiden Modulteile 82, 84 entlang der Rahmen 46 und an den Taststiftträgern 48. Darüber hinaus kann ein weiteres Füllmaterial 94 zwischen den materialstarken Stegbereichen 90 vorgesehen sein. Die Füllmaterialien 92 und 94 können identisch sein und die beiden Modulteile 82, 84 über die gesamte Grundfläche verbinden, oder es kann sich um unterschiedliche Füllmaterialien 92, 94 handeln. Ferner kann das Füllmaterial 94 zwischen den materialstarken Stegbereichen 90 elastischer sein als das Füllmaterial 92 zwischen den Rahmen 46 und den Taststiftträgern 48. Ein elastisches Füllmaterial kann darüber hinaus auch flächendeckend zwischen den beiden Modulteilen 82, 84 vorgesehen sein, während in Fig. 7 ein Ausführungsbeispiel dargestellt ist, bei dem die Füllmaterialien 92, 94 nur abschnittsweise vorgesehen sind, so dass die materialschwachen Stegbereiche 88 freigestellt sind.

In Fig. 8 ist ein weiteres Ausführungsbeispiel des neuen Sensormoduls mit der Bezugsziffer 100 bezeichnet. Das Sensormodul 100 besitzt wie die vorhergehenden Ausführungsbeispiele einen feststehenden Rahmen 46 und einen Taststiftträger 48, die über ein deformierbares Verbindungsglied 102 miteinander verbunden sind. Der Taststiftträger 48 ist hier allerdings nicht als "Boss" in der Mitte des Rahmens 46 ausgebildet, sondern als Platte, die die gesamte Grundfläche des Sensormoduls 100 überspannt. Der Taststift 26 ist mittig auf der Platte befestigt.

Das Verbindungsglied 102 ist hier ein sich über zwei Ebenen erstreckendes, mehrteiliges Gelenk mit einem im Querschnitt U-förmigen Profil. Ein erster Gelenkabschnitt 104 ist mit einem zweiten Gelenkabschnitt 106 über ein Zwischenelement 108 verbunden, wobei die Gelenkabschnitte 104, 106 etwa parallel übereinander liegen, während das Zwischenelement 108 senkrecht dazu steht. Die Endbereiche der Gelenkabschnitte 104, 106 sind als materialschwache Stegbereiche ausgebildet, die eine Verformung ermöglichen. Der Gelenkabschnitt 104 ist über einen ersten materialschwachen Stegbereich mit dem Rahmen 46 verbunden. An seinem anderen Ende ist er über einen zweiten materialschwachen Stegbereich mit dem Zwischenelement 108 verbunden. In gleicher Weise ist der Gelenkabschnitt 106 über einen ersten materialschwachen Stegbereich mit dem Zwischenelement 108 verbunden und über einen zweiten materialschwachen Stegbereich mit dem plattenförmigen Träger 48.

## Patentansprüche

1. Sensormodul für einen Tastkopf (28) eines taktilen Koordinatenmessgerätes (10), mit einer feststehenden Modulbasis (46), die eine erste Messebene (54) definiert, mit einem relativ zu der Modulbasis (46) beweglichen Träger (48), an dem ein Taststift (26) befestigt ist, und mit zumindest einem deformierbaren Verbindungsglied (50; 66; 86; 102), das den Träger (48) und die Modulbasis (46) beweglich miteinander verbindet, wobei das Verbindungsglied (50; 66; 86; 102) zumindest eine erste deformierbare Materiallage (50a; 66a; 86a) und eine zweite deformierbare Materiallage (50b; 66b; 86b) aufweist, die senkrecht zu der ersten Messebene (54) versetzt zueinander angeordnet sind, **dadurch gekennzeichnet, dass** das Sensormodul aus zumindest zwei einlagigen Modulteilen (42, 44; 62, 64; 82, 84) besteht, die aufeinandergesetzt und aneinander befestigt sind, wobei jedes Modulteil (42, 44; 62, 64; 82, 84) eine Modulbasis (46a, 46b) in Form eines Rahmens und einen Taststiftträger (48a, 48b) besitzt, der innerhalb des Rahmens (46a, 46b) angeordnet und über eine der deformierbaren Materiallagen (50a, 50b; 66a, 66b; 86a, 86b) mit dem zugehörigen Rahmen (46a, 46b) verbunden ist, wobei sich die beiden Modulteile (42, 44; 62, 64; 82, 84) sowohl im Bereich der Rahmen (46a, 46b) als auch im Bereich der Taststiftträger (48a, 48b) berühren, wobei die Materiallagen (50a, 50b; 66a, 66b; 86a, 86b) in einem räumlichen Abstand (D-d) voneinander angeordnet sind, und wobei jede Materiallage (50a, 50b; 66a, 66b; 86a, 86b) aus einem Halbleitermaterial besteht und einstückig mit dem zugehörigen Rahmen (46a, 46b) und Taststiftträger (48a, 48b) verbunden ist.

2. Sensormodul nach Anspruch 1, **dadurch gekennzeichnet, dass** zwischen der ersten und der zweiten Materiallage (86a, 86b) ein Füllmaterial (94) angeordnet ist.

3. Sensormodul nach Anspruch 1 oder 2, **dadurch gekennzeichnet, dass** die erste und die zweite Materiallage (50a, 50b; 66a, 66b; 86a, 86b) aus unteischiedlichem Material bestehen.

4. Sensormodul nach einem der Ansprüche 1 bis 3, dadurch gekennzeichet dass die erste und die zweite Materiallage (50a, 50b; 86a, 86b) deckungsgleich übereinander angeordnet sind.

5. Sensormodul nach einem der Ansprüche 1 bis 4, **dadurch gekennzeichnet dass** das Verbindungsglied zumindest einen ersten stegförmigen Bereich (66a 86a) beinhaltet, der die erste Materiallage bildet.

6. Sensormodul nach Anspruch 5, **dadurch gekennzeichnet, dass** das Verbin dungsglied zumindest einen zweiten stegförmigen Bereich (66b; 86b) beinhaltet, der die zweite Materiallage bildet.

7. Sensormodul nach Anspruch 6, **dadurch gekennzeichnet, dass** der erste und der zweite stegfölmige Bereich (66a, 66b) parallel zu der ersten Messebene (54) versetzt zueinander angeordnet sind.

8. Sensormodul nach einem der Ansprüche 1 bis 7, **dadurch gekennzeichnet, dass** das Verbindungsglied zumindest einen weitgehend geschlossenen Membranbereich (50b) beinhaltet, der die zweite Materiallage bildet.

9. Sensormodul nach einem der Ansprüche 1 bis 8, **dadurch gekennzeichnet, dass** der Taststift (26) unlösbar an dem beweglichen Träger (48) befestigt ist.

## Claims

1. A sensor module for a probe head (28) of a tactile coordinate measuring machine (10), comprising a stationary module base (46) which defines a first measurement plane (54), comprising a support (48) moveable relative to the module base (46), with a stylus (26) being secured to the support, and comprising at least one deformable connecting element (50; 66; 86; 102) which movably interconnects the support (48) and the module base (46), the connecting element (50; 66; 86; 102) having at least a first deformable material layer (50a; 66a; 86a) and a second deformable material layer (50b;66b; 86b) which, perpendicular to the first measurement plane (54), are arranged offset with respect to each other, **characterized in that** the sensor module comprises at least two single-layer module parts (42, 44; 62, 64; 82, 84) which are mounted on and secured to one another, wherein each module part (42, 44; 62, 64; 82, 84) has a module base (46a, 46b) in the form of a frame and a stylus support (48a, 48b) that is arranged inside the frame (46a, 46b) and connected to the associated frame (46a, 46b) via one of the deformable material layers (50a, 50b; 66a, 66b; 86a, 86b), wherein the two module parts (42, 44; 62, 64; 82, 84) touch one another both in the area of the frames (46a, 46b) and in the area of the stylus support (48a, 48b), wherein the material layers (50a, 50b; 66a, 66b; 86a, 86b) are arranged at a mutual spacing (D-d) from one another, and wherein each material layer (50a, 50b; 66a, 66b; 86a, 86b) consists of a semiconductor material and is integrally connected to the associated frame (46a, 46b) and stylus support (48a, 48b).

2. The sensor module of claim 1, **characterized in that** a fill material (94) is arranged between the first and the second material layer (86a, 86b).

3. The sensor module of claim 1 or 2, **characterized in that** the first and the second material layer (50a, 50b; 66a, 66b; 86a, 86b) consist of different material.

4. The sensor module of one of claims 1 to 3, **characterized in that** the first and the second material layers (50a, 50b; 86a, 86b) are arranged congruently one above another.

5. The sensor module of one of claims 1 to 4, **characterized in that** the connecting element comprises at least one first web-shaped area (66a; 86a) which forms the first material layer.

6. The sensor module of claim 5, **characterized in that** the connecting element comprises at least one second web-shaped area (66b; 86b) which forms the second material layer.

7. The sensor module of claim 6, **characterized in that** the first and the second web-shaped areas (66a, 66b), parallel to the first measurement plane (54), are arranged offset with respect to each other.

8. The sensor module of one of claims 1 to 7, **characterized in that** the connecting element comprises at least one substantially closed membrane area (50b) which forms the second material layer.

9. The sensor module of one of claims 1 to 8, **characterized in that** the stylus (26) is permanently secured to the movable support (48).

## Revendications

1. Module de détection pour une tête de palpage (28) d'un appareil de mesure de coordonnées (10) tactile, comprenant une base de module fixe (46) qui définit un premier plan de mesure (54), comprenant un support (48) mobile par rapport à la base de module (46) auquel est fixé un palpeur (26), et comprenant au moins un élément de liaison (50 ; 66 ; 86 ; 102) déformable qui relie ensemble le support (48) et la base de module (46) avec mobilité, l'élément de liaison (50 ; 66 ; 86 ; 102) présentant au moins une première couche de matériau déformable (50a ; 66a ; 86a) et une deuxième couche de matériau déformable (50b ; 66b ; 86b), lesquelles sont disposées perpendiculairement au premier plan de mesure (54) en étant décalées l'une par rapport à l'autre, **caractérisé en ce que** le module de détection se compose d'au moins deux parties de module (42, 44 ; 62, 64 ; 82, 84) monocouches qui sont posées l'une sur l'autre et fixées l'une à l'autre, chaque partie de module (42, 44 ; 62, 64 ; 82, 84) possédant une base de module (46a, 46b) sous la forme d'un cadre et un support de palpeur (48a, 48b) qui est disposé à l'intérieur du cadre (46a, 46b) et qui est relié avec le cadre (46a, 46b) correspondant par le biais de l'une des couches de matériau déformables (50a, 50b ; 66a, 66b ; 86a, 86b), les deux parties de module (42, 44; 62, 64 ; 82, 84) se touchant à la fois dans la zone du cadre (46a, 46b) et dans la zone du support de palpeur (48a, 48b), les couches de matériau (50a, 50b ; 66a, 66b ; 86a, 86b) étant disposées dans un écart spatial (D-d) l'une par rapport à l'autre et chaque couche de matériau (50a, 50b ; 66a, 66b ; 86a, 86b) se composant d'un matériau semiconducteur et étant reliée d'une seule pièce avec le cadre (46a, 46b) et le support de palpeur (48a, 48b) correspondants.

2. Module de détection selon la revendication 1, **caractérisé en ce qu'**un matériau de remplissage (94) est disposé entre la première et la deuxième couches de matériau (86a, 86b).

3. Module de détection selon la revendication 1 ou 2, **caractérisé en ce que** la première et la deuxième couches de matériau (50a, 50b ; 66a, 66b ; 86a, 86b) se composent de matériaux différents.

4. Module de détection selon l'une des revendications 1 à 3, **caractérisé en ce que** la première et la deuxième couches de matériau (50a, 50b ; 86a, 86b) sont disposées en coïncidence l'une au-dessus de l'autre.

5. Module de détection selon l'une des revendications 1 à 4, **caractérisé en ce que** l'élément de liaison contient au moins une première zone en forme de nervure (66a, 86a) qui forme la première couche de matériau.

6. Module de détection selon la revendication 5, **caractérisé en ce que** l'élément de liaison contient au moins une deuxième zone en forme de nervure (66b, 86b) qui forme la deuxième couche de matériau.

7. Module de détection selon la revendication 6, **caractérisé en ce que** la première et la deuxième zones en forme de nervure (66a, 66b) sont disposées parallèlement au premier plan de mesure (54) décalées l'une par rapport à l'autre.

8. Module de détection selon l'une des revendications 1 à 7, **caractérisé en ce que** l'élément de liaison contient au moins une zone à membrane (50b) presque entièrement fermée qui forme la deuxième couche de matériau.

9. Module de détection selon l'une des revendications 1 à 8, **caractérisé en ce que** le palpeur (26) est fixé de manière imperdable au support mobile (48).
